# EUROPÄISCHE PATENTSCHRIFT

(11) **EP 0 379 637 B1**
(45) Veröffentlichungstag und Bekanntmachung des Hinweises auf die Patenterteilung: **05.05.1993**
(21) Anmeldenummer: 89116239.8
(22) Anmeldetag: 02.09.1989
(51) Int. Cl.: B29D 23/22, B29C 53/78

(54) **Verfahren zur Herstellung eines Rohres aus thermoplastischem Kunststoff mit Wendelarmierung**
Process for the production of a thermoplastic pipe having a spiral reinforcement
Procédé pour la fabrication d'un tube en matière thermoplastique comportant un renforcement hélicoidal

(30) Priorität: 24.01.1989 DE 3901928
(43) Veröffentlichungstag der Anmeldung: 01.08.1990
(73) Patentinhaber: TECHNOFORM CAPRANO + BRUNNHOFER KG, 34271 Fuldabrück (DE)
(72) Erfinder: Brunnhofer, Erwin, D-3501 Fuldabrück (DE)
(74) Vertreter: Andrejewski, Walter

(56) Entgegenhaltungen:
- DE-U- 8 705 049
- GB-A- 2 077 880
- US-A- 4 738 740
- PATENT ABSTRACTS OF JAPAN vol. 4, no. 108 (M-024)5. August 1988

## Beschreibung

Die Erfindung betrifft ein Verfahren zur Herstellung eines Rohres aus thermoplastischem Kunststoff mit Wendelarmierung, wobei zuerst ein Kernrohr extrudiert und dieses unmittelbar oder mittelbar zumindest einlagig von zumindest einem verstreckten Monofilfaden aus Armierungskunststoff wendelförmig umwickelt wird. - Das Kernrohr kann im Zusammenhang mit dem Aufbringen der Wendelarmierung oder zuvor extrudiert sein und wird in letzterem Falle z. B. von einem Coil abgezogen. Das Kernrohr und das mit der Wendelarmierung versehene Rohr können praktisch starr oder schlauchförmig flexibel eingestellt werden. Der Begriff Rohr umfaßt insoweit im Rahmen der Erfindung auch Schläuche. Das Kernrohr kann einschichtig oder mehrschichtig aufgebaut sein, z. B. eine Innenschicht aufweisen, die nach Maßgabe der Eigenschaften des Fluids, welches durch das fertige Rohr geführt wird, ausgewählt ist, und kann z. B. eine Außenschicht aufweisen, die nach Maßgabe der aufzunehmenden mechanischen und/oder thermischen Beanspruchungen eingerichtet ist.

Bei dem aus der Praxis bekannten Verfahren, von dem die Erfindung ausgeht, wird der Monofilfaden vorgefertigt. Das Kernrohr wird durch eine Wickelmaschine hindurchgeführt, die eine oder mehrere über den Umfang verteilte Wickelspulen aufweist. Das ist aufwendig und störanfällig. Insbes. stört, daß solche Wickelspulen nur eine endliche Länge des Monofilfadens aufnehmen können. Das führt zu kostenaufwendigen Stillstandszeiten, wenn die Wickelspulen leer sind und durch neue ersetzt werden müssen. Vor allem stört, daß aus armierungstechnischen Gründen erwünschte unterschiedliche Verstreckungsgrade des Monofilfadens oder der Monofilfäden ein aufwendiges Umrüsten erforderlich machen und nicht betriebsmäßig einstellbar sind.

Der Erfindung liegt die Aufgabe zugrunde, das eingangs beschriebene Verfahren so zu führen, daß der Einsatz vorgefertigter Monofilfäden und besonderer Wickelmaschinen nicht mehr erforderlich ist.

Zur Lösung dieser Aufgabe lehrt die Erfindung, daß das Kernrohr mit einer vorgegebenen translatorischen Geschwindigkeit durch zumindest einen um das Kernrohr mit einer vorgegebenen Winkelgeschwindigkeit rotierenden Düsenring geführt wird, der zumindest eine Spinndüse für den Monofilfaden aufweist und an einen Extruder für den Armierungskunststoff angeschlossen ist, daß der Monofilfaden auf seinem Weg bis zum Kernrohr gekühlt sowie durch eine Differenz zwischen Austrittsgeschwindigkeit des Armierungskunststoffes aus der Spinndüse und der Aufwickelgeschwindigkeit des Monofilfadens auf das Kernrohr verstreckt wird, und daß der verstreckte Monofilfaden zur Wendelarmierung auf das Kernrohr aufgewickelt wird. - Erfindungsgemäß wird mit anderen Worten der Monofilfaden bzw. werden die Monofilfäden erst beim Armierungsvorgang des Kernrohres hergestellt, und zwar mit Hilfe eines Düsenringes bzw. mit Hilfe von Düsenringen, die mit einer definierten Winkelgeschwindigkeit und Drehrichtung rotieren. Der jeweils gewünschte Steigungswinkel der Wendel kann über die Drehzahl des Düsenringes und die Translationsgeschwindigkeit des Kernschlauches eingestellt werden. Dabei kann ohne weiteres eine Wendelarmierung auch aus Monofilfäden aufgebaut werden, die überkreuz angeordnet sind. Dazu wird mit Düsenringen gearbeitet, deren Winkelgeschwindigkeit eine unter schiedliche Richtung aufweist. Je nach Wahl der Kühlung können die Monofilfäden beim Aufwickeln an den Kreuzungspunkten miteinander verschweißt werden oder kann auch jede Verschweißung vermieden werden. Die Kühlung erfolgt beispielsweise dadurch, daß Kühlluft durch den Düsenring hindurchgeführt wird.

Eine bevorzugte Ausführungsform der Erfindung, der selbständige Bedeutung zukommt, ist dadurch gekennzeichnet, daß für den Monofilfaden ein flüssigkristallines Polymer oder eine Polymermischung mit flüssigkristallinen Anteilen verwendet wird. Solche Werkstoffe sind bekannt (Kunststoffe 78 (1988) 5, S. 411 bis 417). Überraschenderweise erhält man bei dem erfindungsgemäßen Verfahren durch die Verwendung dieser Werkstoffe erstaunliche Festigkeiten der Wendelarmierung und lassen sich sehr definierte Verstreckungsgrade einrichten.

Erfindungsgemäß können die translatorische Geschwindigkeit des Kernrohres und/oder die Winkelgeschwindigkeit des Düsenringes so gesteuert oder geregelt werden, daß die Wendelarmierung unterschiedlichsten Anforderungen genügen kann. Im Rahmen der Erfindung liegt es, mit einem Düsenring zu arbeiten, der äquidistant über den Umfang verteilt zwei oder mehr als zwei Spinndüsen aufweist. Das gilt auch dann, wenn mehrere Dusenringe in Translationsrichtung hintereinander angeordnet werden. Insbes. kann mit zwei oder mehr als zwei Düsenringen gearbeitet werden, die längs des Kernrohres mit Abstandszwischenraum angeordnet sind, wobei die Düsenringe mit in bezug auf Richtung und/oder Größe unterschiedlicher Winkelgeschwindigkeit angetrieben werden können.

Bei dem erfindungsgemäßen Verfahren kann die Wendelarmierung unmittelbar auf das Kernrohr aufgewickelt werden. Es besteht aber auch die Möglichkeit, auf das Kernrohr zunächst eine Zwischenschicht aufzubringen. Eine Zwischenschicht kann auch zwischen unterschiedlichen Lagen der Wendelarmierung angeordnet werden, eine Umhüllung kann die Wendelarmierung umgehen. Um diese Varianten zu verwirklichen, lehrt die Erfindung, daß das Kernrohr zusätzlich durch ein feststehendes Ringdüsenwerkzeug oder mehrere feststehende Ringdüsenwerkzeuge hindurchgeführt wird, die einzeln vor dem in Translationsrichtung ersten rotierenden Düsenring und/oder zwischen benachbarten rotierenden Düsenringen und/oder hinter dem in Translationsrichtung letzten Düsenring angeordnet werden sowie an einen Extruder angeschlossen sind, und daß dabei schlauchförmige Umhüllungen auf das Kernrohr und/oder auf zumindest eine Lage der Wendelarmierung aufgebracht werden.

Im folgenden wird die Erfindung anhand einer Zeichnung ausführlicher erläutert.

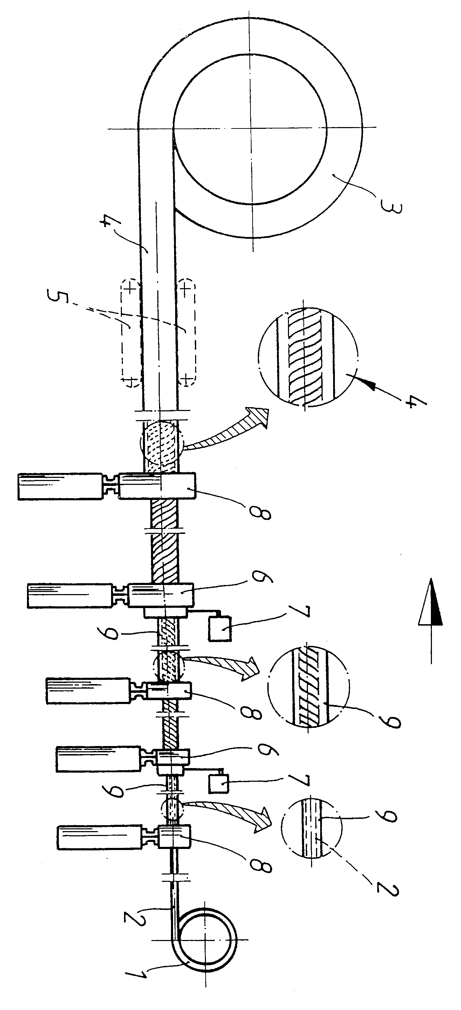

Die einzige Figur zeigt eine Anlage, die für die Durchführung des erfindungsgemäßen Verfahrens eingerichtet ist. Zu dieser Anlage gehören zunächst ein Coil 1, von dem ein vorgefertigtes Kernrohr 2 abgezogen wird, und ein Coil 3, auf welches das mit der Wendelarmierung versehene fertige Rohr 4 aus thermoplastischem Kunststoff aufgewickelt wird. Die Spule dieses Coils 3 ist angetrieben. Im übrigen ist eine entsprechende Abzugsvorrichtung 5 vorgesehen. Das Kernrohr 2 wird mit einer vorgegebenen translatorischen Geschwindigkeit durch mehrere um das Kernrohr 2 mit einer vorgegebenen Winkelgeschwindigkeit rotierende Düsenringe 6 geführt. Diese Düsenringe 6 besitzen jeweils zumindest eine nicht gezeichnete Spinndüse für den Monofilfaden. Die Düsenringe 6 sind gemeinsam oder einzeln an einen Extruder für den Armierungskunststoff angeschlossen. Für die Rotation der Düsenringe 6 um das Kernrohr sind besondere Antriebseinrichtungen vorgesehen, z. B. in Form von Getriebemotoren 7. Die Anordnung ist so getroffen, daß ein Monofilfaden auf seinem Weg bis zum Kernrohr 2 gekühlt wird. Die dazu verwirklichten Maßnahmen sind in der Zeichnung nicht erkennbar. Durch eine Diffe-renz der Austrittsgeschwindigkeit des Armierungskunststoffes aus der Spinndüse und der Aufwickelgeschwindigkeit des Monofilfadens auf das Kernrohr 2 erfolgt eine Verstreckung. Der verstreckte Monofilfaden wird zur Wendelarmierung auf das Kernrohr aufgewickelt, im Ausführungsbeispiel jedoch nicht unmittelbar, sonder mittelbar. Im Ausführungsbeispiel wird das Kernrohr 2 nämlich zusätzlich durch feststehende Ringdüsenwerkzeuge 8 hindurchgeführt. Man erkennt ein solches vor dem in Translationsrichtung ersten rotierenden Düsenring 6, zwischen den beiden benachbarten Düsenringen 6 und hinter dem in Translationsrichtung letzten Düsenring 6. Es versteht sich, daß auch diese Ringdüsenwerkzeuge 8 an einen Extruder angeschlossen sind. Man erreicht so, daß auf das Kernrohr 2 zunächst eine Zwischenschicht 9 aufgebracht wird, die als Verbundschicht zwischen der ersten Lage der Wendelarmierung und dem Kernrohr 2 dienen kann und Haftungseigenschaften aufweisen kann. Dann wird die erste Lage der Wendelarmierung aufgebracht und eine erneute Zwischenschicht 9 der schon angegebenen Funktion. Dazu dient das in Translationsrichtung zweite Ringdüsenwerkzeug 8. Danach wird die zweite Lage der Wendelarmierung aufgebracht und die fertige Wendelarmierung wird von einer Umhüllung abgedeckt. Es versteht sich, daß die translatorische Geschwindigkeit des Kernrohres 2 und/oder die Winkelgeschwindigkeit der Düsenringe gesteuert werden kann, auch besteht die Möglichkeit mit Düsenringen 6 zu arbeiten, die äquidistant über den Umfang verteilt zwei oder mehr als zwei Spinndüsen besitzen.

## Patentansprüche

1. Verfahren zur Herstellung eines Rohres (4) aus thermoplastischem Kunststoff mit Wendelarmierung, wobei zuerst ein Kernrohr (2) extrudiert und dieses zumindest einlagig unmittelbar oder mittelbar von zumindest einem verstreckten Monofilfaden aus Armierungskunststoff wendelförmig umwickelt wird, **dadurch gekennzeichnet**, daß das Kernrohr (2) mit einer vorgegebenen translatorischen Geschwindigkeit durch zumindest einen um das Kernrohr (2) mit einer vorgegebenen Winkelgeschwindigkeit rotierenden Düsenring (6) geführt wird, der zumindest eine Spinndüse für den Monofilfaden aufweist und an einen Extruder für den Armierungskunststoff angeschlossen ist, daß der Monofilfaden auf seinem Weg bis zum Kernrohr (2) gekühlt sowie durch eine Differenz zwischen der Austrittsgeschwindigkeit des Armierungskunststoffes aus der Spinndüse und der Aufwickelgeschwindigkeit des Monofilfadens auf das Kernrohr (2) verstreckt wird, und daß der verstreckte Monofilfaden zur Wendelarmierung auf das Kernrohr (2) aufgewickelt wird.

2. Verfahren nach Anspruch 1, dadurch gekennzeichnet, daß für den Monofilfaden ein flüssigkristallines Polymer oder eine Polymermischung mit flüssigkristallinen Anteilen verwendet wird.

3. Verfahren nach einem der Ansprüche 1 oder 2, dadurch gekennzeichnet, daß die translatorische Geschwindigkeit des Kernrohres (2) und/oder die Winkelgeschwindigkeit des Düsenringes (6) gesteuert oder geregelt werden.

4. Verfahren nach einem der Ansprüche 1 bis 3, dadurch gekennzeichnet, daß mit einem Düsenring (6) gearbeitet wird, der äquidistant über den Umfang verteilt zwei oder mehr als zwei Spinndüsen aufweist.

5. Verfahren nach einem der Ansprüche 1 bis 4, dadurch gekennzeichnet, daß mit zwei oder mehr als zwei Düsenringen (6) gearbeitet wird, die längs des Kernrohres (2) mit Abstandszwischenraum angeordnet sind, und daß die Düsenringe (6) mit in bezug auf Richtung und/oder Größe unterschiedlicher Winkelgeschwindigkeit angetrieben werden.

6. Verfahren nach einem der Ansprüche 1 bis 5, dadurch gekennzeichnet, daß das Kernrohr (2) zusätzlich durch ein feststehendes Ringdüsenwerkzeug (8) oder mehrere feststehende Ringdüsenwerkzeuge (8) hindurchgeführt wird, die einzeln vor dem in Translationsrichtung ersten rotierenden Düsenring (6) und/oder zwischen benachbarten rotierenden Düsenringen (6) und/oder hinter dem in Translationsrichtung letzten Düsenring (6) angeordnet werden sowie an einen Extruder angeschlossen sind, und daß dabei schlauchförmige Umhüllungen (9) auf das Kernrohr (2) und/oder auf zumindest eine Lage der Wendelarmierung aufgebracht werden.

## Claims

1. A process for the production of a thermoplastic pipe (4) having a spiral reinforcement, whereby a core pipe (2) is first extruded then, directly or indirectly, wrapped with at least one layer of at least one stretched monofilament of reinforcing plastic, characterised in that the core pipe (2) is passed at a prescribed longitudinal speed through at least one nozzle ring (6) which rotates at a prescribed angular velocity about the core pipe (2), the nozzle ring (6) having at least one spinning nozzle for the monofilament and being attached to an extruder for the reinforcing plastic, that the monofilament is cooled on its way to the core pipe (2), and is stretched by a difference between the exit speed of the reinforcing material from the spinning nozzle and the speed with which the monofilament is wrapped on to the core pipe (2), and the stretched monofilament being wrapped on the core pipe (2) to form the spiral reinforcement.

2. A process as in Claim 1, characterised in that the monofilament is made from a liquid-crystal polymer or a mixture of polymers having a proportion of liquid-crystal components.

3. A process as in either of Claims 1 and 2, characterised in that the longitudinal speed of the core pipe (2) and/or the angular velocity of the nozzle ring (6) is or are controlled or regulated.

4. A process as in any of Claims 1 to 3, characterised in that use is made of a nozzle ring (6) having two or more than two spinning nozzles spaced equidistantly about its circumference.

5. A process as in any of Claims 1 to 4, characterised in that use is made of two or more than two nozzle rings (6) arrayed with intermediate gaps along the core pipe (2), and that the nozzle rings (6) are driven at different angular velocities with respect to direction and/or speed.

6. A process as in any of Claims 1 to 5, characterised in that the core pipe (2) is additionally passed through a stationary ring nozzle tool (8) or a plurality of stationary ring nozzle tools (8), individually set up upstream in the direction of advance of the first rotating nozzle ring (6) and/or between adjacent rotating nozzle rings (6) and/or downstream in the direction of advance of the final nozzle ring (6), and being attached to an extruder, and that hose-like jackets (9) are applied on to the core pipe (2) and/or at least one layer of the spiral reinforcement.

## Revendications

1. Procédé pour fabriquer un tube (4) en matière thermoplastique comportant une armature hélicoïdale, et selon lequel on extrude tout d'abord un noyau tubulaire (2) et on l'enveloppe, directement ou indirectement, au moins par une couche, et selon une disposition hélicoïdale, avec au moins un monofil étiré formé d'une matière plastique d'armature, caractérisé en ce qu'on fait passer le noyau tubulaire (2), avec une vitesse de translation prédéterminée, à travers au moins un anneau porte-filière (6), qui tourne autour du noyau tubulaire (2) avec une vitesse angulaire prédéterminée, possède au moins une filière pour le monofil et est raccordé à une extrudeuse pour la matière plastique d'armature, que le monofilament est refroidi sur son trajet de déplacement jusqu'au noyau tubulaire (2) et est étiré sous l'effet de la différence existant entre la vitesse de sortie de la matière plastique d'armature à partir de la filière et la vitesse d'enroulement du monofilament sur le noyau tubulaire (2), et qu'on enroule le monofilament étiré sur le noyau tubulaire (2) pour former l'armature hélicoïdale.

2. Procédé selon la revendication 1, caractérisé en ce qu'on utilise pour le monofilament un polymère à l'état de cristal liquide ou un mélange polymérique comprenant des composantes à l'état de cristal liquide.

3. Procédé selon l'une des revendications 1 ou 2, caractérisé en ce qu'on commande ou on règle la vitesse de translation du noyau tubulaire (2) et/ou la vitesse angulaire de l'anneau porte-filières (6).

4. Procédé selon l'une des revendications 1 à 3, caractérisé en ce qu'on travaille avec un anneau portefilières (6) qui possède deux ou plus de deux filières réparties de façon équidistante sur son pourtour.

5. Procédé selon l'une des revendications 1 à 4, caractérisé en ce qu'on travaille avec deux ou plus de deux anneaux porte-filières (6), qui sont disposés le long du noyau tubulaire (2) en étant séparés par un espace intercalaire, et que les anneaux porte-filières (6) sont entraînés avec une vitesse angulaire différente du point de vue direction et/ou valeur.

6. Procédé selon l'une des revendications 1 à 5, caractérisé en ce qu'on fait passer en supplément les noyaux tubulaires (2) dans un outil fixe (8) portant des filières disposées en anneau ou dans plusieurs outils fixes (8) portant des filières disposées en anneau, qui sont disposés individuellement devant le premier anneau portebuse (6) rotatif dans la direction de translation et/ou entre des anneaux porte-filières rotatifs (6) voisins et/ou en aval du dernier anneau porte-filières (6) dans la direction de translation, et sont raccordés à une extrudeuse, et qu'on dispose des enveloppes en forme de tuyaux (9) sur le noyau tubulaire (2) et/ou sur au moins une couche de l'armature hélicoïdale.
